# EUROPÄISCHE PATENTSCHRIFT

(11) **EP 1 485 982 B1**
(45) Veröffentlichungstag und Bekanntmachung des Hinweises auf die Patenterteilung: **10.08.2005**
(21) Anmeldenummer: 03720142.3
(22) Anmeldetag: 05.03.2003
(51) Int. Cl.: H02M 1/12, H02M 1/00

(54) **SCHALTUNG ZUR ELEKTRISCHEN LEISTUNGSFAKTORKORREKTUR**
CIRCUIT USED FOR POWER FACTOR CORRECTION
CIRCUIT DE CORRECTION DU FACTEUR DE PUISSANCE ELECTRIQUE

(30) Priorität: 21.03.2002 DE 10212645
(43) Veröffentlichungstag der Anmeldung: 15.12.2004
(73) Patentinhaber: Patent-Treuhand-Gesellschaft für elektrische Glühlampen mbH, 81543 München (DE)
(72) Erfinder: HONSBERG-RIEDL, Martin, 83317 Teisendorf (DE); CZEKAY, Dietmar, 01069 Dresden (DE)
(86) Internationale Anmeldenummer: PCT/DE2003/000721
(87) Internationale Veröffentlichungsnummer: WO 2003/081756

(56) Entgegenhaltungen:
- US-A- 6 107 753
- US-A1- 2002 011 801
- US-B1- 6 337 800
- FENGFENG TAO ET AL: "A comparative study of a family of charge pump power factor correction electronic ballasts" APPLIED POWER ELECTRONICS CONFERENCE AND EXPOSITION, 1999. APEC '99. FOURTEENTH ANNUAL DALLAS, TX, USA 14-18 MARCH 1999, PISCATAWAY, NJ, USA,IEEE, US, 14. März 1999 (1999-03-14), Seiten 739-745, XP010323609 ISBN: 0-7803-5160-6
- CALLEJA A J ET AL: "Design and experimental results of an input-current-shaper based electronic ballast" INDUSTRY APPLICATIONS CONFERENCE, 1999. THIRTY-FOURTH IAS ANNUAL MEETING. CONFERENCE RECORD OF THE 1999 IEEE PHOENIX, AZ, USA 3-7 OCT. 1999, PISCATAWAY, NJ, USA,IEEE, US, 3. Oktober 1999 (1999-10-03), Seiten 269-276, XP010355178 ISBN: 0-7803-5589-X

## Beschreibung

Die Erfindung betrifft eine Schaltung zur elektrischen Leistungsfaktorkorrektur nach dem Oberbegriff des Anspruchs 1 und wie sie aus Jinrong Quian et al.: "Charge Pump Power-Faktor-Correction Technologies Part I: Concept and Principle", IEEE Transactions on Power Electronics, Vol. 15, No. 1, Januar 2000 bekannt ist (siehe dort insbesondere Figur 6a und dazugehörige Beschreibung S. 123, rechte Spalte und folgende Seiten).

Diese bekannte Schaltung und andere bekannte Schaltungen zur elektrischen Leistungsfaktorkorrektur (siehe z.B. das genannte Dokument, US-Patente Nr. 4 808 887, Nr. 5 008 597, Nr. 5 371 440, Nr. 5 521 467, Nr. 5 789 871, Nr. 5 914 572, Nr. 6 057 652, Nr. 6 091 206, DE-A-3 142 613, WO 97/22231, WO 99/25159, JP-A-10-214 695, JP-A-2000-012 257) werden derzeit beispielsweise bei modernen elektronischen Vorschaltgeräten, sog. EVGs, eingesetzt, welche die elektrische Energie aus den verfügbaren Netzspannungen, in der Regel Wechselspannungen, so umformen, dass die jeweils angeschlossenen Verbraucher, in der Mehrzahl Lampen, in ihrem optimalen Spannungs-, Strom und Frequenzbereich betrieben werden können. Gegenüber dem Netz sollen die EVGs ein elektrisches Verhalten zeigen, das bestmöglichst einem ohmschen Widerstand entspricht, um Verzerrungen des Netzstroms und der Netzspannung zu vermeiden.

Die bekannten Schaltungen zur elektrischen Leistungsfaktorkorrektur arbeiten bei Frequenzen von 20 bis 100 kHz, wodurch die Baugröße der notwendigen Induktivitäten und Kapazitäten festgelegt ist, und diese sind mit Abstand die größten Bauteile einer solchen Schaltungen.

Der Erfindung liegt das Problem zugrunde, eine Schaltung zur elektrischen Leistungsfaktorkorrektur bereitzustellen, die eine Miniaturisierung dieser Schaltung ermöglicht.

Dieses Problem wird mit einer Schaltung zur elektrischen Leistungsfaktorkorrektur gelöst, welche die im Anspruch 1 angegebenen Merkmale aufweist.

Gemäß dieser Lösung ist eine Schaltung zur elektrischen Leistungsfaktorkorrektur bereitgestellt, die aufweist:
- einen Eingangsanschluss zum Anlegen einer elektrischen Leistung mit einer insbesondere zeitlich sich ändernden elektrischen Gleichspannung gegenüber einem elektrischen Bezugspotential,
- einen Bezugspotentialanschluss zum Anlegen des Bezugspotentials
- einen Ausgangsanschluss zur Entnahme einer leistungsfaktorkorrigierten elektrischen Leistung,
- zumindest zwei zwischen den Eingangsanschluss und Ausgangsanschluss in Reihe hintereinander und jeweils vom Eingangsanschluss zum Ausgangsanschluss in Durchlassrichtung geschaltete Dioden,
- eine zwischen den Ausgangsanschluss und den Bezugspotentialanschluss geschaltete elektrische Kapazität,
- eine weitere Kapazität, die eine an einen elektrischen Verbindungspunkt zwischen den zwei Dioden angeschlossene Elektrode und eine andere Elektrode aufweist, und
- eine Frequenzspannungsquelle zur Erzeugung einer elektrischen Ausgangsspannung, die zwischen im Wesentlichen der Gleichspannung am Eingangsanschluss und dem Bezugspotential am Bezugspotentialanschluss mit einer Frequenz schwankt, die höher als eine Frequenz der Gleichspannung am Eingangsanschluss ist, und die an der anderen Elektrode der weiteren Kapazität anliegt, und die dadurch gekennzeichnet ist,
dass die Frequenzspannungsquelle aufweist:
- zwei zwischen den Ausgangsanschluss und den Bezugspotentialanschluss in Reihe hintereinander geschaltete Ein-Aus-Schalter aufweist, die bei einer Frequenz von mindestens 1 Megahertz derart schnell im Gegentakt zueinander schalten, dass an einem elektrischen Verbindungspunkt zwischen diesen beiden Schaltern eine mit dieser Frequenz von mindestens 1 Megahertz zwischen im Wesentlichen der Gleichspannung am Eingangsanschluss und dem Bezugspotential am Bezugspotentialanschluss schwankende Rechteckspannung erzeugt wird, und
- eine Glättungseinrichtung zu einem Glätten der Rechteckspannung und Erzeugen aus der Rechteckspannung einer mit der Frequenz von mindestens 1 Megahertz zwischen im Wesentlichen der Gleichspannung am Eingangsanschluss und dem Bezugspotential am Bezugspotentialanschluss schwankenden geglätteten elektrischen Spannung, die als Ausgangsspannung der Frequenzspannungsquelle an der anderen Elektrode der weiteren Kapazität anliegt, wobei
- ein Kapazitätswert der weitere Kapazität so gewählt ist, dass die weitere Kapazität mit der Frequenz von mindestens 1 Megahertz der geglätteten elektrischen Spannung aufgeladen und/oder entladen wird.

Bei der erfindungsgemäßen Schaltung wird die Miniaturisierung vorteilhafterweise durch die deutliche Schaltfrequenzerhöhung vom kHz-Bereich in den MHz-Bereich erreicht. Dabei erlaubt die erfindungsgemäße Schaltung vorteilhafterweise den Schaltbetrieb im MHz-Bereich mit den extrem schnell schaltenden Ein-Aus-Schaltern bei einem hohen Wirkungsgrad von beispielsweise 85% bis 95% und guter Leistungsfaktorkorrektur.

Bei den mit 20 bis 100 kHz betriebenen bekannten Schaltungen zur Leistungsfaktorkorrektur erlauben diese Frequenzen moderater Höhe zwar eine Reihe von Schaltungsvarianten mit hohem Wirkungsgrad und guter Leistungsfaktorkorrektur, aber die Baugröße kann durch die erforderlichen Induktivitäten und Kapazitäten (bei gegebener Leistung) nur begrenzt verringert werden.

Bei einer bevorzugten und vorteilhaften Ausgestaltung der erfindungsgemäßen Schaltung weist die Glättungseinrichtung ein Tiefpassfilter auf, das für die Frequenz von mindestens 1 Megahertz im Wesentlichen vollständig durchlässig ist, dem als Eingangssignal die Rechteckspannung vom Verbindungspunkt zwischen den Schaltern zugeführt ist, und dessen Ausgangssignal die geglättete elektrische Spannung bildet, die als Ausgangsspannung der Frequenzspannungsquelle an der anderen Elektrode der weiteren Kapazität anliegt.

Bei einer bevorzugten und vorteilhaften Ausführungsform dieser Ausgestaltung der erfindungsgemäßen Schaltung weist das Tiefpassfilter zwei zwischen den Verbindungspunkt zwischen den beiden Schaltern und die andere Elektrode der weiteren Kapazität in Reihe hintereinander geschaltete Induktivitäten und eine zusätzliche Kapazität auf, die zwischen einen elektrischen Verbindungspunkt zwischen den Induktivitäten und den Bezugspotentialanschluss geschaltet ist.

Bei einer anderen bevorzugten und vorteilhaften Ausgestaltung der erfindungsgemäßen Schaltung weist die Glättungseinrichtung einen HF-Transformator mit einer zwischen den Verbindungspunkt zwischen den beiden Schaltern und den Bezugspotentialanschluss geschalteten Primärinduktivität und mit einer zwischen die andere Elektrode der weiteren Kapazität und den Bezugspotentialanschluss geschalteten und an die Primärinduktivität gekoppelten Sekundärinduktivität auf. Bei dieser Ausgestaltung wird der HF-Transformator vorzugsweise resonant mit einem Kopplungsgrad k < 1 betrieben.

Bei einer bevorzugten und vorteilhaften Ausführungsform dieser anderen Ausgestaltung ist zwischen den Verbindungspunkt zwischen den beiden Schaltern und die Primärinduktivität eine zusätzliche Kapazität geschaltet.

Die eine und andere Ausgestaltung der erfindungsgemäßen Schaltung sind in einer einzigen Schaltung miteinander kombinierbar, insbesondere auch in den angegebenen Ausführungsformen.

Der Wirkungsgrad der erfindungsgemäßen Schaltung kann vorteilhafterweise zusätzlich optimiert werden, wenn zwischen dem Verbindungspunkt zwischen den zwei Dioden und den Bezugspotentialanschluss eine zusätzliche weitere Kapazität parallel zur weiteren Kapazität geschaltet ist. Diese zusätzliche weitere Kapazität kann als Abstimmkapazität zu Optimierung des Wirkungsgrads verwendet werden.

Ein Ein-Aus-Schalter der erfindungsgemäßen Schaltung weist vorzugsweise einen MOS-Transistorschalter, insbesondere einen CoolMOS®-Schalter auf.

Die erfindungsgemäße Schaltung umfasst in allen Ausgestaltungen und deren Ausführungsformen vorteilhafterweise nur wenige Bauteile und erreicht dabei vorteilhafterweise bei sehr guter Leistungsfaktorkorrektur (PFC) einen hohen Wirkungsgrad von weit größer als 90% im MHz-Frequenzbereich, vorausgesetzt es werden HF-fähige Kapazitäten, Induktivitäten und Dioden (Schottky-Dioden) eingesetzt. Ihr Aufbau kann vorteilhafterweise miniaturisiert werden, da HF-Induktivitäten und HF-Kapazitäten sehr klein gehalten werden können.

Die erfindungsgemäße Schaltung ist besonders für EVGs, insbesondere für Lampen aller Art, geeignet.

Die Erfindung wird in der nachfolgenden Beschreibung anhand der Figuren beispielhaft näher erläutert. Es zeigen:
- Figur 1: ein erstes Ausführungsbeispiel der erfindungsgemäßen Schaltung, und
- Figur 2: ein zweites Ausführungsbeispiel der erfindungsgemäßen Schaltung.

In den Figuren ist erfindungsgemäße Schaltung zur elektrischen Leistungsfaktorkorrektur generell mit 1 bezeichnet.

Ein Eingangsanschluss 10 der Schaltung 1 dient zum Anlegen einer elektrischen Leistung P mit einer insbesondere zeitlich sich ändernden elektrischen Gleichspannung U gegenüber einem elektrischen Bezugspotential Φ, das an einem Bezugspotentialanschluss 11 der Schaltung 1 anzulegen und beispielsweise Masse ist.

Beispielsweise ist die Gleichspannung U eine von einer Netzwechselspannung durch Gleichrichtung in einem nicht dargestellten Gleichrichter erzeugte pulsierende Gleichspannung von z.B. 220 V und der Frequenz f₀ = 50 Hz.

Die in der Schaltung 1 leistungsfaktorkorrigierte elektrischen Leistung P1 ist einem Ausgangsanschluss 12 zu entnehmen, beispielsweise durch eine zwischen den Ausgangsanschluss 12 und den Bezugspotentialanschluss 11 geschaltete Last 2, die beispielsweise aus einer oder mehreren Lampen besteht. In den Figuren ist diese Last 2 beispielsweise zwischen den Ausgangsanschluss 12 und einen weiteren Ausgangsanschluss 13 der Schaltung 1 geschaltet, der direkt mit dem Bezugspotentialanschluss 11 verbunden ist und wie dieser auf dem Bezugspotential Φ liegt.

Zwischen den Eingangsanschluss 10 und den Ausgangsanschluss 12 sind zwei Dioden 21 und 22 in Reihe hintereinander und jeweils vom Eingangsanschluss 10 zum Ausgangsanschluss 12 in Durchlassrichtung geschaltet, so dass bei der Gleichspannung U am Eingangsanschluss 10 elektrischer Strom I vom Eingangsanschluss 10 durch die Dioden 21 und 22 zum Ausgangsanschluss 12 fließen kann.

Zwischen den Ausgangsanschluss 12 und den Bezugspotentialanschluss 11 ist eine elektrischen Kapazität 13 geschaltet, die auch als Ladekapazität bezeichnet wird und einen ausreichend hohen Kapazitätswert C_{lade} aufweist.

Eine weitere Kapazität 14 weist eine an einen elektrischen Verbindungspunkt 20 zwischen den zwei Dioden 21 und 22 angeschlossene Elektrode 141 und eine andere Elektrode 142 auf. Diese weitere Kapazität 14 wird auch als Pumpkapazität bezeichnet und weist einen Kapazitätswert Cₚᵤₘₚ auf, der kleiner als C_{lade} ist.

Eine Frequenzspannungsquelle 15 dient zur Erzeugung einer elektrischen Ausgangsspannung, die zwischen im Wesentlichen der Gleichspannung U am Eingangsanschluss 10 und dem Bezugspotential Φ am Bezugspotentialanschluss 11 mit einer Frequenz schwankt, die höher als eine Frequenz, z.B. die Frequenz f₀, der Gleichspannung U am Eingangsanschluss 10 ist und die an der anderen Elektrode 142 der weiteren Kapazität 14 anliegt.

Bis hierher stimmt die erfindungsgemäße Schaltung 1 mit der aus dem oben zuerst genannten Dokument hervorgehenden Schaltung überein.

Bei der erfindungsgemäßen Schaltung 1 weist die Frequenzspannungsquelle 15 zwei zwischen den Ausgangsanschluss 12 und den Bezugspotentialanschluss 11 in Reihe hintereinander geschaltete Ein-Aus-Schalter 151 und 152 auf, die bei einer Frequenz f von mindestens 1 Megahertz derart schnell im Gegentakt zueinander schalten, dass an einem elektrischen Verbindungspunkt 153 zwischen diesen beiden Schaltern 151 und 152 eine mit dieser Frequenz f von mindestens 1 Megahertz zwischen im Wesentlichen der Gleichspannung U am Eingangsanschluss 10 und dem Bezugspotential Φ am Bezugspotentialanschluss 11 schwankende Rechteckspannung U1 erzeugt wird.

Ist der untere Schalter 152 geschlossen und gleichzeitig der obere Schalter 151 offen, liegt zu diesem Zeitpunkt am Verbindungspunkt 153 die am Ausgang der Diode 22 und damit am Ausgangsanschluss 12 der Schaltung 1 herrschende elektrische Spannung an, die im Wesentlichen mit der Gleichspannung U am Eingangsanschluss 10 der Schaltung 1 übereinstimmt. Ist andererseits der untere Schalter 152 offen und gleichzeitig der obere Schalter 151 geschlossen, liegt zu diesem Zeitpunkt der Verbindungspunkt 153 im Wesentlichen auf dem Bezugspotential Φ.

Außerdem weist bei der erfindungsgemäßen Schaltung 1 die Frequenzspannungsquelle 15 eine Glättungseinrichtung 150 zu einem Glätten der Rechteckspannung U1 und Erzeugen aus der Rechteckspannung U1 einer mit der Frequenz f von mindestens 1 Megahertz zwischen im Wesentlichen der Gleichspannung U am Eingangsanschluss 10 und dem Bezugspotential Φ am Bezugspotentialanschluss 11 schwankenden geglätteten elektrischen Spannung Uf, die als Ausgangsspannung der Frequenzspannungsquelle 15 an der anderen Elektrode 142 der weiteren Kapazität 14 anliegt.

Vorzugsweise ist die Glättungseinrichtung 150 so ausgebildet, dass aus der Rechteckspannung U1 der Frequenz eine im Wesentlichen sinusförmige geglättete Spannung Uf der Frequenz f entsteht.

Der Kapazitätswert Cₚᵤₘₚ der weitere Kapazität 14 ist bei der Schaltung 1 so gewählt, dass die weitere Kapazität 14 mit der Frequenz. f von mindestens 1 Megahertz der geglätteten elektrischen Spannung Uf aufgeladen und/oder entladen wird.

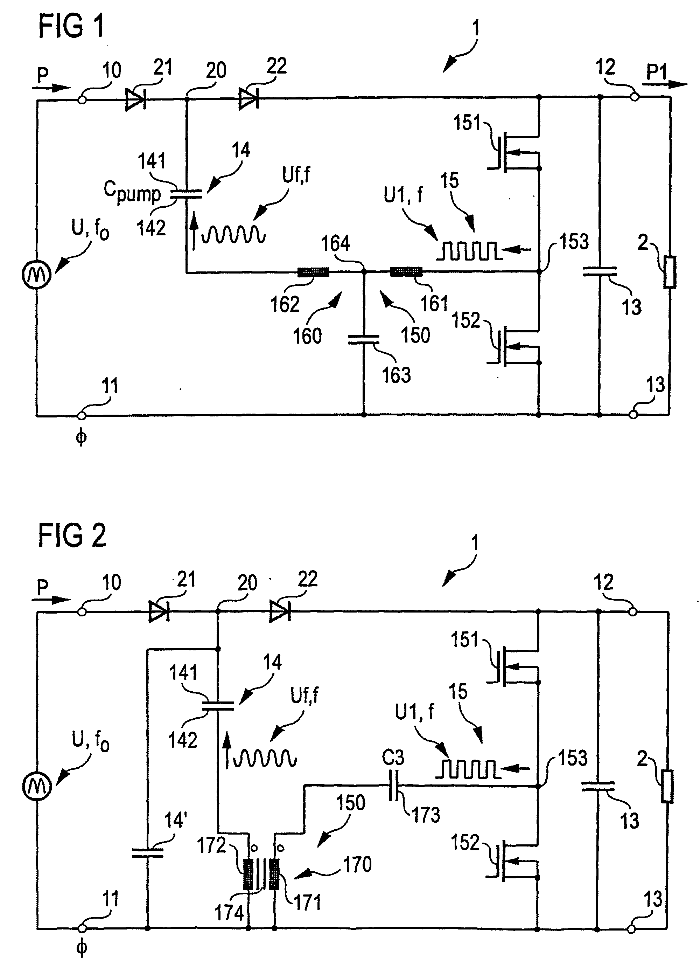

Beim Ausführungsbeispiel nach Figur 1 der Schaltung 1 weist die Glättungseinrichtung 150 ein Tiefpassfilter 160 auf, das für die Frequenz f von mindestens 1 Megahertz im Wesentlichen vollständig durchlässig ist. Dem Tiefpassfilter 160 ist als Eingangssignal die Rechteckspannung U1 vom Verbindungspunkt 153 zwischen den Schaltern 151 und 152 zugeführt, und das Ausgangssignal des Tiefpassfilters 160 bildet die geglättete elektrische Spannung Uf, die als Ausgangsspannung der Frequenzspannungsquelle 15 an der anderen Elektrode 142 der weiteren Kapazität 14 anliegt.

Das Tiefpassfilter 160 weist speziell zwei zwischen den Verbindungspunkt 153 zwischen den beiden Schaltern 151 und 152 und die andere Elektrode 142 der weiteren Kapazität 14 in Reihe hintereinander geschaltete Induktivitäten 161 und 162 und eine zusätzliche Kapazität 163 auf. Diese Kapazität 163 ist zwischen einen elektrischen Verbindungspunkt 164 zwischen den Induktivitäten 161 und 162 und den Bezugspotentialanschluss 11 geschaltet.

Beim Ausführungsbeispiel nach Figur 2 weist die Glättungseinrichtung 150 einen HF-Transformator 170 mit einer zwischen den Verbindungspunkt 153 zwischen den beiden Schaltern 151 und 152 und den Bezugspotentialanschluss 11 geschalteten Primärinduktivität 171 und mit einer zwischen die andere Elektrode 142 der weiteren Kapazität 14 und den Bezugspotentialanschluss 11 geschalteten und an die Primärinduktivität 171 beispielsweise über einen Eisenkern 174 gekoppelten Sekundärinduktivität 172 auf.

Speziell ist zwischen den Verbindungspunkt 153 zwischen den beiden Schaltern 151 und 152 und die Primärinduktivität 171 eine zusätzliche Kapazität 173 geschaltet, die den Verbindungspunkt 153 gleichstrommäßig vom Transformator 170 abkoppelt und nur wechselstrommäßig an den Transformator 170 ankoppelt. Der Transformator 170 wird resonant mit einem Kopplungsgrad k < 1 betrieben.

Bei der Schaltung 1 nach den Figuren 1 und 2 kann zwischen den Verbindungspunkt 20 zwischen den zwei Dioden 21 und 22 und den Bezugspotentialanschluss 11 eine zusätzliche weitere Kapazität parallel zur weiteren Kapazität 14 geschaltet sein, wie sie beim Ausführungsbeispiel nach Figur 2 dargestellt und mit 14' bezeichnet ist. Mit einer solchen zusätzlichen weiteren Kapazität 14' kann der Wirkungsgrad der Schaltung 1 zusätzlich optimiert werden.

Die Ein-Aus-Schalter 151 und 152 sind jeweils durch einen MOS-Transistorschalter, vorzugsweise einen CoolMOS®-Schalter realisiert.

In Zusammenfassung entspricht die Schaltung 1 zur elektrischen Leistungsfaktorkorrektur einer bekannten derartigen Schaltung mit einer HF-Spannungsquelle 15 zum Erzeugen einer hochfrequenten elektrischen Spannung Uf für eine Pumpkapazität 14. Die HF-Spannungsquelle 15 weist erfindungsgemäß zwei in Reihe hintereinander geschaltete Ein-Aus-Schalter 151 und 152, die an einem elektrischen Verbindungspunkt 153 zwischen diesen beiden Schaltern 151 und 152 eine mit einer Frequenz f von mindestens 1 Megahertz schwankende Rechteckspannung U1 erzeugen, und eine Glättungseinrichtung 150 zum Erzeugen einer mit der Frequenz f von mindestens 1 Megahertz schwankenden geglätteten elektrischen Spannung Uf aus der Rechteckspannung U1 für die Pumpkapazität 14 auf.

## Patentansprüche

1. Schaltung (1) zur elektrischen Leistungsfaktorkorrektur, mit:
- einem Eingangsanschluss (10) zum Anlegen einer elektrischen Leistung (P) mit einer insbesondere zeitlich sich ändernden elektrischen Gleichspannung (U) gegenüber einem elektrischen Bezugspotential (Φ),
- einem Bezugspotentialanschluss (11) zum Anlegen des Bezugspotentials (Φ)
- einem Ausgangsanschluss (12) zur Entnahme einer leistungsfaktorkorrigierten elektrischen Leistung (P1),
- zumindest zwei zwischen den Eingangsanschluss (10) und Ausgangsanschluss (12) in Reihe hintereinander und jeweils vom Eingangsanschluss (10) zum Ausgangsanschluss (12) in Durchlassrichtung geschalteten Dioden (21, 22),
- einer zwischen den Ausgangsanschluss (12) und den Bezugspotentialanschluss (11) geschalteten elektrischen Kapazität (13), und
- einer weiteren Kapazität (14), die eine an einen elektrischen Verbindungspunkt (20) zwischen den zwei Dioden (21, 22) angeschlossene Elektrode (141) und eine andere Elektrode (142) aufweist, und
- einer Frequenzspannungsquelle (15) zur Erzeugung einer elektrischen Ausgangsspannung, die zwischen im Wesentlichen der Gleichspannung (U) am Eingangsanschluss (10) und dem Bezugspotential (Φ) am Bezugspotentialanschluss (11) mit einer Frequenz schwankt, die höher als eine Frequenz (f₀) der Gleichspannung (U) am Eingangsanschluss (10) ist, und die an der anderen Elektrode (142) der weiteren Kapazität (14) anliegt,
**dadurch gekennzeichnet,**
**dass** die Frequenzspannungsquelle (15) aufweist:
- zwei zwischen den Ausgangsanschluss (12) und den Bezugspotentialanschluss (11) in Reihe hintereinander geschaltete Ein-Aus-Schalter (151, 152) aufweist, die bei einer Frequenz (f) von mindestens 1 Megahertz derart schnell im Gegentakt zueinander schalten, dass an einem elektrischen Verbindungspunkt (153) zwischen diesen beiden Schaltern (151, 152) eine mit dieser Frequenz (f) von mindestens 1 Megahertz zwischen im Wesentlichen der Gleichspannung (U) am Eingangsanschluss (10) und dem Bezugspotential (Φ) am Bezugspotentialanschluss (11) schwankende Rechteckspannung (U1) erzeugt wird, und
- eine Glättungseinrichtung (150) zu einem Glätten der Rechteckspannung (U1) und Erzeugen aus der Rechteckspannung (U1) einer mit der Frequenz (f) von mindestens 1 Megahertz zwischen im Wesentlichen der Gleichspannung (U) am Eingangsanschluss (10) und dem Bezugspotential (Φ) am Bezugspotentialanschluss (11) schwankenden geglätteten elektrischen Spannung (Uf), die als Ausgangsspannung der Frequenzspannungsquelle (15) an der anderen Elektrode (142) der weiteren Kapazität (14) anliegt, wobei
- ein Kapazitätswert (Cₚᵤₘₚ) der weitere Kapazität (14) so gewählt ist, dass die weitere Kapazität (14) mit der Frequenz (f) von mindestens 1 Megahertz der geglätteten elektrischen Spannung (Uf) aufgeladen und/oder entladen wird.

2. Schaltung nach Anspruch 1, wobei die Glättungseinrichtung (150) ein Tiefpassfilter (160) aufweist, das für die Frequenz (f) von mindestens 1 Megahertz im Wesentlichen vollständig durchlässig ist, dem als Eingangssignal die Rechteckspannung (U1) vom Verbindungspunkt (153) zwischen den Schaltern (151, 152) zugeführt ist, und dessen Ausgangssignal die geglättete elektrische Spannung (Uf) bildet, die als Ausgangsspannung der Frequenzspannungsquelle (15) an der anderen Elektrode (142) der weiteren Kapazität (14) anliegt.

3. Schaltung nach Anspruch 2, wobei das Tiefpassfilter (160) zwei zwischen den Verbindungspunkt (153) zwischen den beiden Schaltern (151, 152) und die andere Elektrode (142) der weiteren Kapazität (14) in Reihe hintereinander geschaltete Induktivitäten (161, 162) und eine zusätzliche Kapazität (163) aufweist, die zwischen einen elektrischen Verbindungspunkt (164) zwischen den Induktivitäten (161, 162) und den Bezugspotentialanschluss (11) geschaltet ist.

4. Schaltung nach Anspruch 2 oder 3, wobei die Glättungseinrichtung (150) einen HF-Transformator (170) mit einer zwischen den Verbindungspunkt (153) zwischen den beiden Schaltern (151, 152) und den Bezugspotentialanschluss (11) geschalteten Primärinduktivität (171) und mit einer zwischen die andere Elektrode (142) der weiteren Kapazität (14) und den Bezugspotentialanschluss (11) geschalteten und an die Primärinduktivität (171) gekoppelten Sekundärinduktivität (172) auf.

5. Schaltung nach Anspruch 4, wobei zwischen den Verbindungspunkt (153) zwischen den beiden Schaltern (151, 152) und die Primärinduktivität (171) eine zusätzliche Kapazität (173) geschaltet ist.

6. Schaltung nach einem der vorhergehenden Ansprüche, wobei zwischen dem Verbindungspunkt (20) zwischen den zwei Dioden (21, 22) und den Bezugspotentialanschluss (11) eine zusätzliche weitere Kapazität (14') parallel zur weiteren Kapazität (14) geschaltet ist.

7. Schaltung nach einem der vorhergehenden Ansprüche, wobei ein Ein-Aus-Schalter (151, 152) einen MOS-Transistorschalter aufweist.

## Claims

1. Circuit (1) for power factor correction comprising:
- an input terminal (10) for applying an electrical power (P) having a direct voltage (U) that varies in particular over time with respect to an electrical reference potential (φ),
- a reference-potential terminal (11) for applying the reference potential (φ)
- an output terminal (12) for drawing a power-factor corrected electrical power (P1),
- at least two diodes (21, 22) connected in series between the input terminal (10) and output terminal (12), each connected in the forward direction from the input terminal (10) to the output terminal (12),
- a capacitor (13) connected between the output terminal (12) and the reference-potential terminal (11), and
- an extra capacitor (14) having an electrode (141) connected to an electrical junction (20) of the two diodes (21, 22), and another electrode (142), and
- a frequency voltage source (15) for generating an output voltage which is applied to the other electrode (142) of the extra capacitor (14), said output voltage varying substantially between the direct voltage (U) at the input terminal (10) and the reference potential (φ) at the reference-potential terminal (11) at a frequency that is higher than a frequency (f₀) of the direct voltage (U) at the input terminal (10),
**characterized in that**
the frequency voltage source (15) comprises:
- two on/off switches (151, 152) connected in series between the output terminal (12) and the reference-potential terminal (11), which switch in push-pull mode at such high speed at a frequency (f) of at least 1 Megahertz that between these two switches (151, 152) a square-wave voltage (U1) is generated that varies substantially between the direct voltage (U) at the input terminal (10) and the reference potential (φ) at the reference-potential terminal (11) at this frequency (f) of at least 1 Megahertz, and
- a smoothing device (150) for smoothing the square-wave voltage (U1) and generating from the square-wave voltage (U1) a smoothed voltage (Uf) which is applied as output voltage of the frequency voltage source (15) to the other electrode (142) of the extra capacitor (14), said smoothed voltage varying substantially between the direct voltage (U) at the input terminal (10) and the reference potential (φ) at the reference-potential terminal (11) at the frequency (f) of at least 1 Megahertz, where
- a capacitance (cₚᵤₘₚ) of the extra capacitor (14) is selected so that the extra capacitor (14) is charged and/or discharged at the frequency (f) of at least 1 Megahertz of the smoothed voltage (Uf).

2. Circuit according to Claim 1, wherein the smoothing device (150) comprises a low-pass filter (160) that is substantially completely transparent for the frequency (f) of at least 1 Megahertz, to which the square-wave voltage (U1) from the junction (153) of the switches (151, 152) is fed as an input signal, and whose output signal constitutes the smoothed voltage (Uf) that is applied as output voltage of the frequency voltage source (15) to the other electrode (142) of the extra capacitor (14).

3. Circuit according to Claim 2, wherein the low-pass filter (160) comprises two inductors (161, 162) connected in series between the other electrode (142) of the extra capacitor (14) and the junction (153) of the two switches (151, 152), and an additional capacitor (163) that is connected between the reference-potential terminal (11) and an electrical junction (164) of the inductors (161, 162).

4. Circuit according to Claim 2 or 3, wherein the smoothing device (150) comprises an RF transformer (170) having a primary inductor (171) connected between the reference-potential terminal (11) and the junction (153) of the two switches (151, 152), and having a secondary inductor (172) connected between the other electrode (142) of the extra capacitor (14) and the reference-potential terminal (11) and coupled to the primary inductor (171).

5. Circuit according to Claim 4, wherein an additional capacitor (173) is connected between the primary inductor (171) and the junction (153) of the two switches (151, 152).

6. Circuit according to one of the preceding claims, wherein an additional extra capacitor (14') is connected in parallel with the extra capacitor (14) between the reference-potential terminal (11) and the junction (20) of the two diodes (21, 22).

7. Circuit according to one of the preceding claims, wherein an on/off switch (151, 152) comprises a MOS transistor switch.

## Revendications

1. Circuit (1) de correction du facteur de puissance électrique comprenant :
- une borne (10) d'entrée pour l'application d'une puissance (P) électrique ayant une tension (U) continue électrique qui se modifie notamment dans le temps par rapport à un potentiel (Φ) de référence électrique,
- une borne (11) de potentiel de référence pour l'application du potentiel (Φ) de référence,
- une borne (12) de sortie pour le prélèvement d'une puissance (P1) électrique corrigée en facteur de puissance,
- au moins deux diodes (21, 22) montées en série l'une derrière l'autre entre la borne (10) d'entrée et la borne (12) de sortie et respectivement dans le sens passant de la borne (10) d'entrée à la borne (12) de sortie,
- une capacité (13) électrique montée entre la borne (12) de sortie et la borne (11) de potentiel de référence, et
- une capacité (14) supplémentaire qui a une électrode (141) raccordée à un point (20) de liaison électrique entre les deux diodes (21, 22) et une autre électrode (142), et
- une source (15) de tension de fréquence pour la production d'une tension de sortie électrique qui fluctue entre sensiblement la tension (U) continue de la borne (10) d'entrée et le potentiel (Φ) de référence à la borne (11) de potentiel de référence à une fréquence qui est plus haute que la fréquence (f₀) de la tension (U) continue à la borne (10) d'entrée et qui s'applique à l'autre électrode (142) de la capacité supplémentaire (14),
**caractérisé**
**en ce que** la source (15) de la tension de fréquence a :
- deux interrupteurs (151, 152) marche-arrêt qui sont montés en série l'un derrière l'autre entre la borne (12) de sortie et la borne (11) de potentiel de référence et qui, à une fréquence (f) d'au moins 1 mégahertz, commutent si rapidement en opposition entre eux qu'il est produit sur un point (153) de liaison électrique entre ces deux interrupteurs (151, 152) une tension (U1) rectangulaire fluctuant à cette fréquence (f) d'au moins 1 mégahertz entre sensiblement la tension (U) continue à la borne (10) d'entrée et le potentiel (Φ) de référence à la borne (11) du potentiel de référence, et
- un dispositif (150) de lissage pour un lissage de la tension (U1) rectangulaire et la production à partir de la tension (U1) rectangulaire d'une tension (Uf) électrique lissée fluctuant à la fréquence (f) d'au moins 1 mégahertz entre sensiblement la tension (U) continue à la borne (10) d'entrée et le potentiel (Φ) de référence à la borne (11) du potentiel de référence, tension (Uf) qui s'applique en tant que tension de sortie de la source (15) de tension en fréquence à l'autre électrode (142) de la capacité (14) supplémentaire, dans lequel
- une valeur (Cₚᵤₘₚ) de capacité de la capacité (14) supplémentaire est choisie de façon à ce que la capacité (14) supplémentaire soit chargée et/ou déchargée à la fréquence (f) d'au moins 1 mégahertz de la tension (Uf) électrique lissée.

2. Circuit suivant la revendication 1, dans lequel le dispositif (150) de lissage comporte un filtre (160) passe-bas qui laisse passer sensiblement complètement la fréquence (f) d'au moins 1 mégahertz, auquel est envoyé comme signal d'entrée la tension (U1) rectangulaire du point (153) de liaison entre les interrupteurs (151, 152) et dont le signal de sortie forme la tension (Uf) électrique lissée qui s'applique en tant que tension de sortie de la source (15) de tension en fréquence à l'autre électrode (142) de la capacité (14) supplémentaire.

3. Circuit suivant la revendication 2, dans lequel le filtre (160) passe-bas a deux inductances (161, 162) montées en série l'une derrière l'autre, entre le point (153) de liaison compris entre les deux interrupteurs (151, 152) et l'autre électrode (142) de la capacité (14) supplémentaire, et une capacité (163) supplémentaire qui est montée entre un point (164) de liaison électrique compris entre les deux inductances (161, 162) et la borne (11) du potentiel de référence.

4. Circuit suivant la revendication 2 ou 3, dans lequel le dispositif (150) de lissage comporte un transformateur (170) HF ayant une inductance (171) primaire montée entre le point (153) de liaison compris entre les deux interrupteurs (151, 152) et la borne (11) du potentiel de référence et une inductance (172) secondaire montée entre l'autre électrode (142) de la capacité (14) supplémentaire et la borne (11) du potentiel de référence et couplée à l'inductance (171) primaire.

5. Circuit suivant la revendication 4, dans lequel une capacité (173) supplémentaire est montée entre le point (153) de liaison compris entre les deux interrupteurs (151, 152) et l'inductance primaire.

6. Circuit suivant l'une des revendications précédentes, dans lequel une autre capacité (14') supplémentaire est montée en parallèle à la capacité (14) supplémentaire, entre le point (20) de liaison compris entre les deux diodes (21, 22) et la borne (11) du potentiel de référence.

7. Circuit suivant l'une des revendications précédentes, dans lequel un interrupteur (151, 152) marche-arrêt comporte un commutateur à transistor MOS.
